# EUROPEAN PATENT APPLICATION

(11) **EP 1 755 317 A1**
(43) Date of publication of application: **21.02.2007**
(21) Application number: 05748671.4
(22) Date of filing: 10.06.2005
(51) Int. Cl.: H04M 1/02, G06F 1/16

(54) **ELECTRONIC APPARATUS AND METHOD OF DETECTING HOUSING DIRECTION**

(30) Priority: 10.06.2004 JP 2004172755
(71) Applicant: NEC CORPORATION, Minato-ku, Tokyo 108-8001 (JP)
(72) Inventor: HIROSE, T., NEC Saitama, Ltd. 300-18, Aza Toyohara, Saitama 3670214 (JP)
(74) Representative: Glawe, Delfs, Moll
(86) International application number: PCT/JP2005/010683
(87) International publication number: WO 2005/122537

(57) **Abstract**

In a cell phone (1) having an upper housing (2) and a lower housing (3) that connect to each other through a biaxial hinge (21), the upper housing has a built-in magnet (61) at a position spaced apart from a center axis of the upper housing which extends through a vertical axis (Y) of the biaxial hinge. Depending on the direction of the upper housing when the two housings are closed together, the magnet comes to a position symmetrical about the center axis. When MR sensors (62, 63) are disposed at positions in the lower housing which correspond to the symmetrical positions, the direction of the upper housing can be determined. Conventionally, detection of the direction of the housing requires a total of four elements. The present invention enables detection of the direction of the housing by a total of three elements, i.e., the magnet and the two MR sensors. In this manner, the present invention can reduce the number of elements necessary to detect the housing direction, and accordingly the area for mounting the elements.

## Description

### Technical Field

The present invention relates to an electronic apparatus and a method of detecting a housing direction and, more particularly, to an electronic apparatus in which two housings are connected through a biaxial hinge, and a method of detecting the direction of the housing of the electronic apparatus.

### Background Art

A cell phone and PHS (Personal Handyphone System) are items that are owned generally, as the number of their total subscribers in Japan exceeds 87 millions (as of the end of May, 2004).

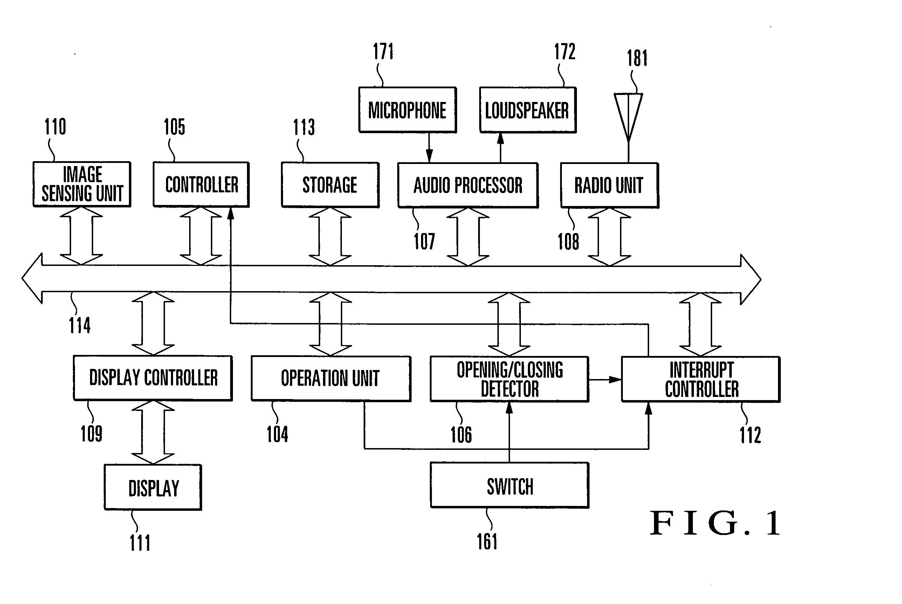

As shown in Fig. 1, a conventional foldable cell phone comprises an operation unit 104, controller 105, storage 113, audio processor 107, microphone 171, loudspeaker 172, radio unit 108, antenna 181, image sensing unit 110, display controller 109, display 111, interrupt controller 112, opening/closing detector 106, and switch 161. Of these members, the operation unit 104, controller 105, storage 113, audio processor 107, radio unit 108, image sensing unit 110, display controller 109, interrupt controller 112, and opening/closing detector 106 connect to a bus 114.

Usually, the display 111 and operation unit 104 are disposed in the upper housing and lower housing, respectively. The upper and lower housings are connected through an uniaxial hinge which pivots in only one direction. To detect the open/closed state of the two housings, a magnet is disposed in the upper housing, and a switch 161 is disposed in the lower housing at a portion which opposes the magnet. When the two housings close together to bring the magnet and the switch 161 to be near each other, the switch 161 is turned on. When the two housings open apart to separate the magnet and the switch 161 from each other, the switch 161 is turned off. The on/off operation of the switch 161 allows the opening/closing detector 106 to check whether the two housings are open apart or closed together.

Upon detecting that the two housings are closed together, the opening/closing detector 106 outputs an interrupt signal to the interrupt controller 112. Upon reception of the interrupt signal, the interrupt controller 112 checks whether the process from the opening/closing detector 106 is a higher-order process than the interrupt process which is taking place currently. As the result of the checking, if the process from the opening/closing detector 106 is the highest-order process, the interrupt controller 112 further outputs an interrupt request to the controller 105.

The controller 105 which has received the interrupt request from the interrupt controller 112 accesses a register in the interrupt controller 112 to check what is the highest-order interrupt process. The controller 105 performs an appropriate process in response to the confirmed interrupt process (for example, see Japanese Patent Laid-Open No. 2001-136251 (reference 1)).

Although the cell phone and the like include speech communication as the main function, they have recently developed into complex forms to include an E-mail viewer function, Web browsing function, image sensing function, and the like. It is becoming impossible for a cell phone or the like with conventional simple foldable shape to cope with the increased functions, and a case emerges which uses a biaxial hinge in place of an uniaxial hinge. A "biaxial hinge is a hinge that has two movable axes which are generally perpendicular to each other.

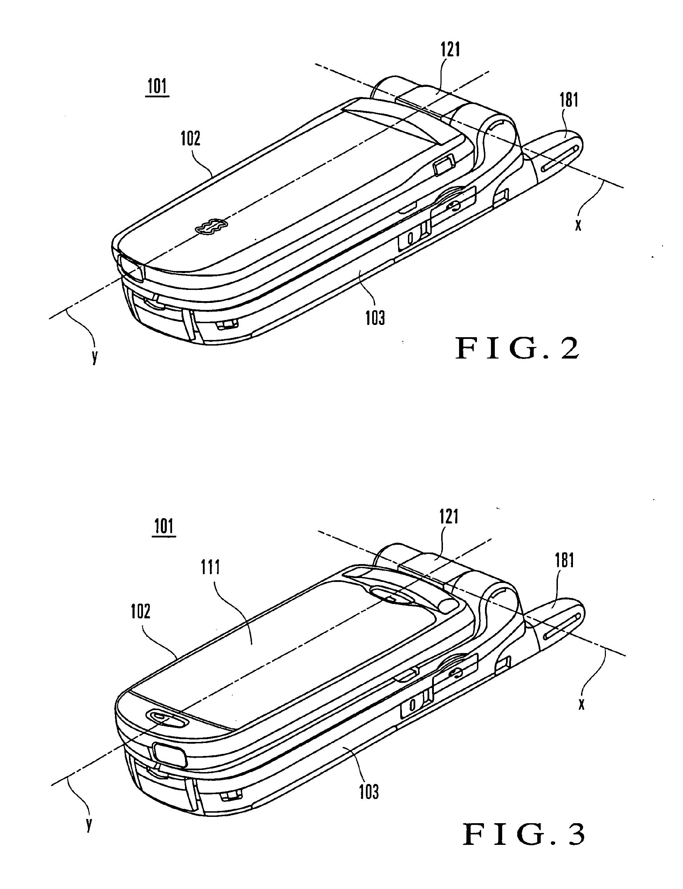

As shown in Figs. 2 and 3, in a conventional foldable cell phone 101 employing a biaxial hinge, a biaxial hinge 121 has one movable axis which is "fixed" in the vicinity of the short side of a lower housing 103, and the other movable axis which pivots about the fixed movable axis as the center. In the following description, that axis of the biaxial hinge 121 which is almost parallel to the short side of the lower housing 103 will be referred to as a horizontal axis x, and that axis of the biaxial hinge 121 which is almost perpendicular to the short side of the lower housing 103 will be referred to a vertical axis y.

A display 111 is disposed in an upper housing 102 of the cell phone 101. When the display 111 is set to oppose the lower housing 103, and the upper housing 102 and lower housing 103 are folded together, the state shown in Fig. 2 is obtained. In this state, assume that the upper housing 102 is opened by almost 90° about the horizontal axis x as the center, that the upper housing 102 is pivoted by almost 180° about the vertical axis y as the center, and that the upper housing 102 is closed by almost 90° about the horizontal axis x as the center. Then, the upper housing 102 and lower housing 103 can be closed together with the display 111 being exposed to the outside, as shown in Fig. 3. In this state, the user can check E-mail and use the image sensing function with a wide screen.

The conventional foldable cell phone 101 employing the biaxial hinge uses two pairs each comprising a magnet and Hall element. This allows detection of the direction of the upper housing 102 when the two housings 102 and 103 are closed together.

### Disclosure of Invention

### Problem to be Solved by the Invention

As described above, use of a pair of the magnet and the switch 161 allows detection of the open/closed state of the two housings. In the conventional foldable cell phone 101 which employs the biaxial hinge, the state shown in Fig. 2 and the state shown in Fig. 3 cannot be discriminated due to the following reason. When the switch 161 is turned on, it indicates that the two housings 102 and 103 are closed together. However, the direction of the upper housing 102 cannot be identified. This problem arises also in a case which uses a magnet and a Hall element or the like in place of the magnet and the switch 161.

Use of two pairs each comprising a magnet and Hall element allows detection of the direction of the housing when the housings are closed together. In this case, however, the number of necessary elements increases to inevitably increase the area for mounting these elements.

The above problems occur not only in the foldable cell phone but are common in electronic apparatuses such as a PDA (Personal Digital Assistant), a notebook personal computer, a cam corder, and the like.

The present invention has been made to solve these problems, and has as its object to reduce the area for mounting elements employed to detect the direction of the housing.

### Means of Solution to the Problem

In order to achieve the above object, according to the present invention, there is provided an electronic apparatus characterized by comprising a first housing, a second housing including a flat surface which opposes the first housing, a biaxial hinge which includes two movable axes including a horizontal axis parallel to the flat surface of the second housing and a vertical axis perpendicular to the horizontal axis and connects the first housing to the second housing, and a first magnetic element which is disposed at a position of the first housing which is spaced apart from a center axis of the first housing that extends through the vertical axis of the second-axis hinge.

According to the present invention, there is provided a method of detecting a housing direction, characterized by comprising the steps of detecting a magnetic field, generated by a magnet disposed at a position of a first housing which is spaced apart from a center axis of the first housing, by either one of two magnetic sensors which are disposed at positions of a second housing which are across a center axis of the second housing that connects to the first housing through a biaxial hinge, and determining a direction of the first housing with respect to the second housing in accordance with which one of the two magnetic sensors has detected the magnetic field.

### Effect of the Invention

According to the present invention, the first magnetic element is disposed at that position of the first housing which is spaced apart from the center axis of the first housing. Depending on the direction of the first housing when the first and second housings are closed together, the first magnetic element comes to a position symmetrical about the center axis. Therefore, a disposition of second magnetic elements at positions corresponding to these positions in the second housing allows determination of the direction of the first housing. Conventionally, detection of the direction of the housing requires a total of four elements. In contrast to this, according to the present invention, a total of three elements, i.e., one first magnetic element and two second magnetic elements, allows detection of the direction of the housing. In this manner, the present invention can reduce the number of elements necessary to detect the housing direction, and accordingly the area for mounting the elements.

### Brief Description of Drawings

Fig. 1 is a functional block diagram of a conventional foldable cell phone which uses an uniaxial hinge;
Fig. 2 is a perspective view of a conventional foldable cell phone which employs a biaxial hinge to show a state wherein housings are closed together to store a display;
Fig. 3 is a perspective view of the conventional foldable cell phone which employs the biaxial hinge to show a state wherein the housings are closed together to expose the display;
Fig. 4 is a perspective view of a foldable cell phone according to the first embodiment of the present invention to show a state wherein housings are closed together to store a display;
Fig. 5 is a perspective view of the foldable cell phone according to the first embodiment of the present invention to show a state wherein the upper housing is open;
Fig. 6 is a perspective view of the foldable cell phone according to the first embodiment of the present invention to show a state wherein the upper housing is pivoting;
Fig. 7 is a perspective view of the foldable cell phone according to the first embodiment of the present invention to show a state after the upper housing is pivoted by 180°;
Fig. 8 is a perspective view of the foldable cell phone according to the first embodiment of the present invention to show a state wherein the housings are closed together to expose the display;
Fig. 9 is a functional block diagram of the foldable cell phone according to the first embodiment of the present invention;
Fig. 10 is a functional block diagram of the opening/closing detector of Fig. 9;
Fig. 11 is a perspective view of a foldable cell phone according to the second embodiment of the present invention;
Fig. 12 is a functional block diagram of the foldable cell phone according to the second embodiment of the present invention; and
Fig. 13 is a functional block diagram of the opening/closing detector of Fig. 12.

### Best Mode for Carrying Out the Invention

The embodiments of the present invention will be described in detail with reference to the drawings.

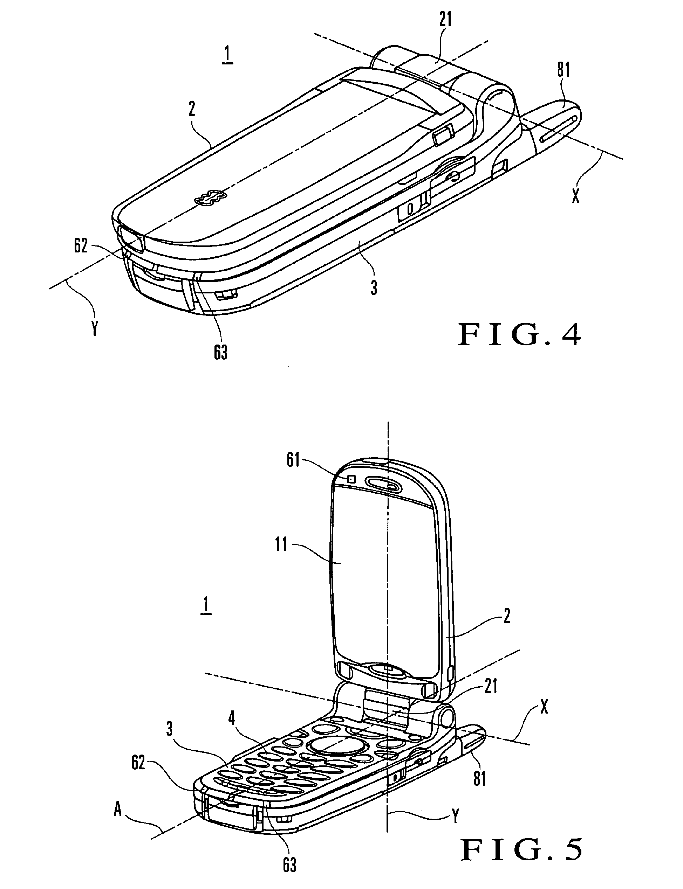

A foldable cell phone according to the first embodiment of the present invention will be described. As shown in Figs. 4 to 8, a foldable cell phone 1 according to the first embodiment has an upper housing (first housing) 2 with a display (display means) 11 disposed on its surface, a lower housing (second housing) 3 with an operation unit 4 disposed on its surface, and a biaxial hinge 21 which connects the two housings 2 and 3. The housings 2 and 3 are both almost rectangular when seen from the top. The biaxial hinge 21 connects to the short sides of the housings 2 and 3. The biaxial hinge 21 is a hinge that has two movable axes which are generally perpendicular to each other. In this description, an axis which is almost parallel to the flat surface of the lower housing 3 where the operation unit 4 is disposed will be referred to as a horizontal axis X, and an axis which is almost perpendicular to the horizontal axis X will be referred to as a vertical axis Y. The upper housing 2 and lower housing 3 can open apart and close together about the horizontal axis X of the biaxial hinge 21 as the center. The upper housing 2 can pivot about the vertical axis Y of the biaxial hinge 21 as the center.

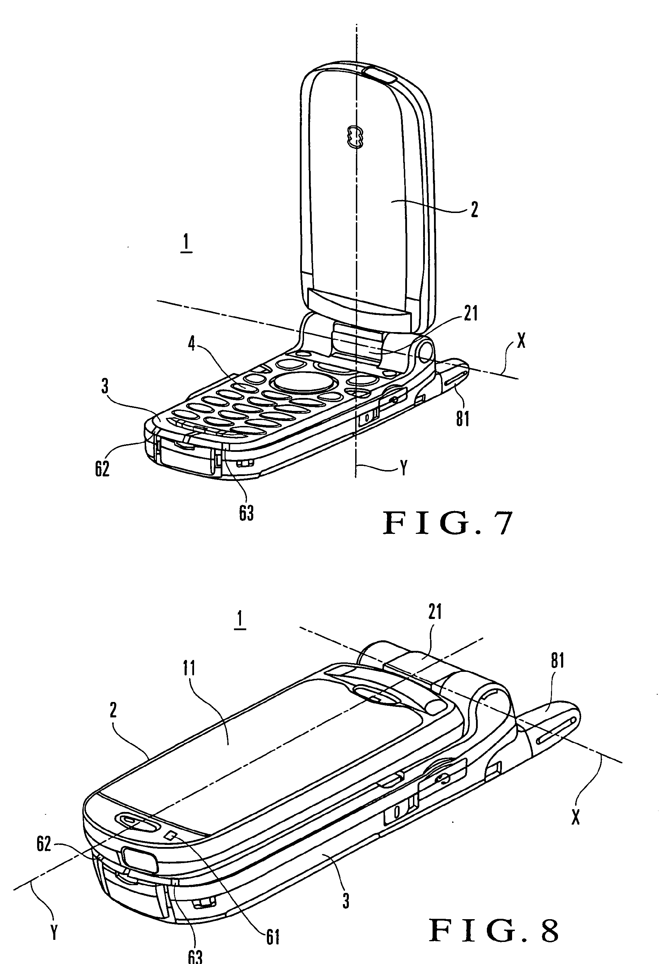

As shown in Fig. 5, the center axis of the upper housing 2 extends through the vertical axis Y of the biaxial hinge 21. The upper housing 2 has a built-in magnet (a magnet or first magnetic element) 61, which generates a magnetic field, at a position spaced apart from the center axis of the upper housing 2. A center axis A of the lower housing 3 is perpendicular to the horizontal axis X of the biaxial hinge 21. When the two housings 2 and 3 are closed together and oppose each other, the center axis A of the lower housing 3 opposes the center axis of the upper housing 2. The lower housing 3 has two built-in magnetic sensors (second magnetic elements) 62 and 63, which detect the magnetic field, at positions across the center axis A. More specifically, the two magnetic sensors 62 and 63 are disposed almost symmetrically about the center axis A of the lower housing 3. When the two housings 2 and 3 are closed together as shown in Fig. 4, the magnetic sensor 62 opposes the magnet 61. When the upper housing 2 is pivoted by 180° about the vertical axis Y of the biaxial hinge 21 as the center and the two housings 2 and 3 are closed together as shown in Fig. 8, the magnetic sensor 63 opposes the magnet 61.

As the magnetic sensors 62 and 63, magnetic resistance sensors (to be referred to as "MR (Magnetic Resistance) sensors" hereinafter) can be used. An MR sensor is a magnetic sensor that utilizes a change in resistance which is caused by the magnetic field. A Hall element detects the either polarity of N pole or S pole. In contrast to this, the characteristic feature of the MR sensor resides in that the MR sensor senses regardless of the polarity of the magnetic pole. In the following description, MR sensors are used as the magnetic sensors 62 and 63, of which one will be referred as the first MR sensor 62 and the other will be referred to as the second MR sensor 63.

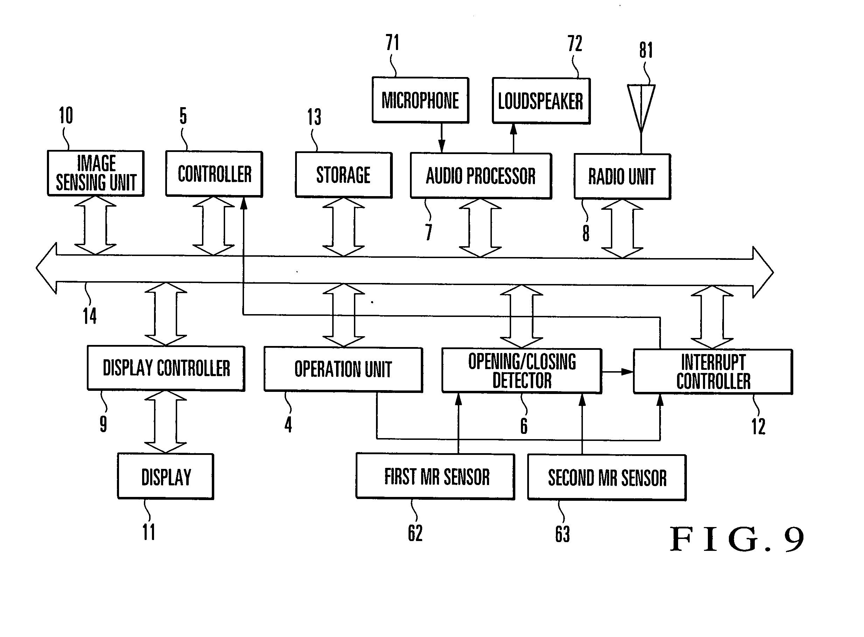

The arrangement of the foldable cell phone will be further described with reference to Fig. 9. In addition to the display 11, operation unit 4, magnet 61, and first and second MR sensors 62 and 63 described above, the foldable cell phone 1 further has a controller 5, storage 13, audio processor 7, microphone 71, loudspeaker 72, radio unit 8, antenna 81, image sensing unit 10, display controller 9, opening/closing detector 6, and interrupt controller 12. Of these members, the operation unit 4, controller 5, storage 13, audio processor 7, radio unit 8, image sensing unit 10, display controller 9, opening/closing detector 6, and interrupt controller 12 connect to a bus 14.

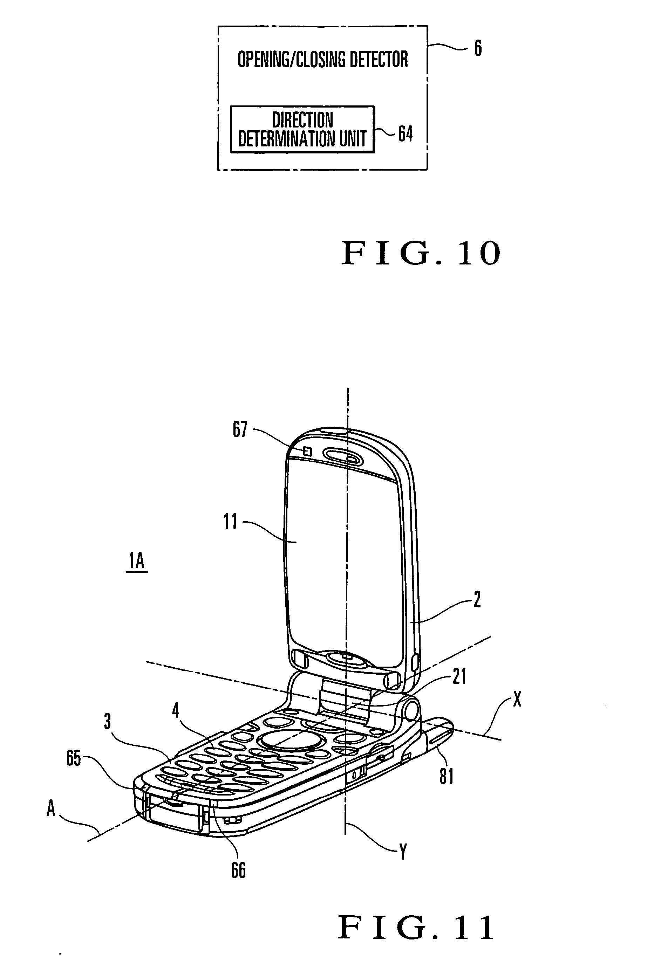

The controller 5 controls the operations of the respective portions of the foldable cell phone 1. The storage 13 stores a program which operates the controller 5, and various types of other data. The audio processor 7 performs processes such as A/D conversion of a signal input from the microphone 71 and D/A conversion of a signal to be output to the loudspeaker 72. The radio unit 8 performs processes such as frequency conversion, coding, or decoding of a signal that the antenna 81 transmits and receives. The image sensing unit 10 performs recording by a camera. The display controller 9 performs control when displaying an image including a character on the display 11. The opening/closing detector 6 detects the open/closed state of the upper housing 2 and lower housing 3 on the basis of the detection results of the two MR sensors 62 and 63. The opening/closing detector 6 also has a direction determination unit (direction determining means) 64, as shown in Fig. 10, which determines the direction of the upper housing 2, i.e., the direction of the display 11, when the housings are closed together in accordance with which one of the two MR sensors 62 and 63 has detect the magnetic field. The interrupt controller 12 performs interrupt control when the two housings 2 and 3 are closed together with the display 11 being exposed to the outside.

The operation of the foldable cell phone 1 will be described with reference to Figs. 4 to 8 again. For the descriptive convenience, suppose that the N pole of the magnet 61 directs to the display 11 and that its S pole directs to the opposite side to the display 11.

In the state shown in Fig. 4, the upper housing 2 and lower housing 3 are closed together such that the display 11 opposes the lower housing 3. At this time, the first MR sensor 62 opposes the N pole of the magnet 61. Hence, the N pole of the magnet 61 applies high-density magnetic fluxes to the first MR sensor 62. Upon application of the magnetic fluxes to the detection surface of the first MR sensor 62, a current flows from the first MR sensor 62 to the opening/closing detector 6. Since no magnetic fluxes are applied to the detection surface of the second MR sensor 63, no current flows from the second MR sensor 63 to the opening/closing detector 6. When the opening/closing detector 6 detects the current from the first MR sensor 62, it can be determined that the upper housing 2 is closed without exposing the display 11 to the outside.

As shown in Fig. 5, assume that the upper housing 2 opposing the lower housing 3 is opened by almost 90° about the horizontal axis X as the center. This removes the magnetic fluxes of the magnet 61 that have been acting on the first MR sensor 62. As a result, not only the current from the second MR sensor 63 but also the current from the first MR sensor 62 stops. Thus, the opening/closing detector 6 determines that the upper housing 2 has opened.

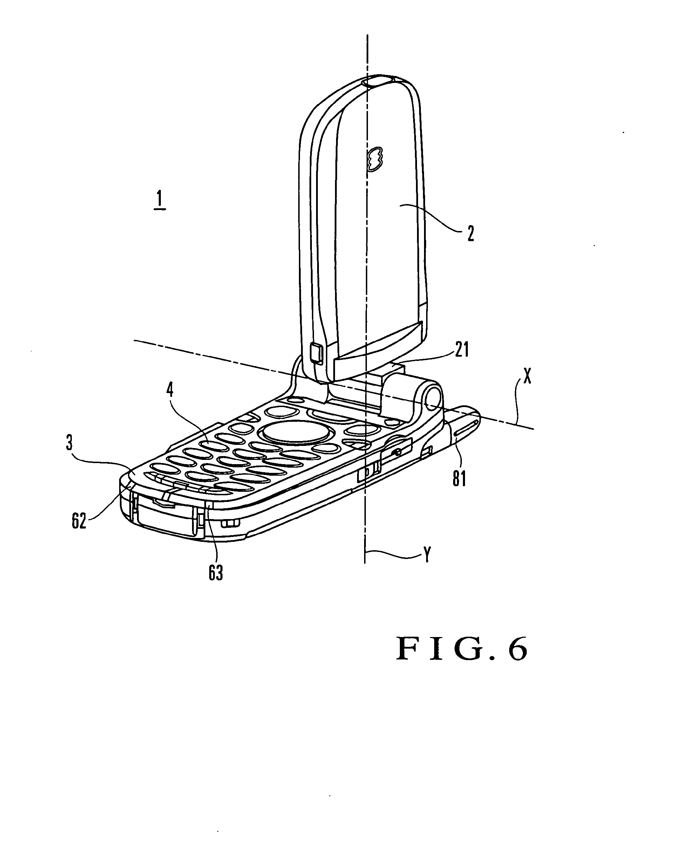

In the state shown in Fig. 5, when the upper housing 2 is pivoted by almost 90° about the vertical axis Y as the center, the state shown in Fig. 6 is obtained. When the upper housing 2 is further pivoted by 90° about the vertical axis Y as the center, the rear surface of the display 11 opposes the lower housing 3, as shown in Fig. 7. At this time, the second MR sensor 63 opposes the S pole of the magnet 61.

In this state, assume that the upper housing 2 is closed by almost 90° about the horizontal axis X as the center. This enables the upper housing 2 and lower housing 3 to close together with the display 11 being exposed to the outside. At this time, the magnetic fluxes from the S pole of the magnet 61 act on the detection surface of the second MR sensor 63. This causes a current to flow from the second MR sensor 63 to the opening/closing detector 6. At this time, no current flows from the first MR sensor 62 to the opening/closing detector 6. When the opening/closing detector 6 detects the current from the second MR sensor 63, it can be determined that the upper housing 2 has been closed with the display 11 being exposed to the outside.

Upon this determination, the opening/closing detector 6 outputs an interrupt signal to the interrupt controller 12. Assume that the process that takes place at opening/closing detection is of the highest priority among the currently requested processes. In this case, the interrupt controller 12 further outputs an interrupt signal to the controller 5. Upon reception of the interrupt signal from the interrupt controller 12, the controller 5 performs a process that should take place at opening/closing detection.

Conditions required for outputting the interrupt signal from the opening/closing detector 6 can include the following ones:
· when a signal is input from the first MR sensor 62 or second MR sensor 63
   (the reaction occurs only when the housings are closed together)
· when the signal from the first MR sensor 62 or second MR sensor 63 changes
   (the reaction occurs both when the housings are closed together and opened apart)
· when the signal from the first MR sensor 62 or second MR sensor 63 is interrupted
   (the reaction occurs only when the housings are opened apart)

Note that the conditions are not limited to those described above. For example, when a specific application or function (camera) operates, a change in state of the housings may not be informed to the controller 5.

Processes that can take place at opening/closing detection can include the following ones:
· to change the display direction of the display 11
· to change the display content of the display 11
· to turn on/off the backlight (not shown) of the display 11
· to enable or disable the display 11
· to start or stop the image sensing unit 10 ·to start the application set at shipping from the factory
· to start the application that the user set in advance
· to adjust the sensitivity of the microphone 71 and loudspeaker 72
· when a plurality of microphones 71 or loudspeaker 72 are provided, to switch among them

Note that the processes are not limited to those described above.

As described above, according to this embodiment, the magnet 61 is disposed at that position of the upper housing 2 which is spaced apart from the center axis of the upper housing 2. Depending on the direction of the upper housing 2 when the upper housing 2 and lower housing 3 are closed together, the magnet 61 comes to a position symmetrical about the center axis. By disposing the first MR sensor 62 and second MR sensor 63 to those positions of the lower housing 3 which correspond to the symmetrical positions, the direction of the upper housing 2 can be determined. Conventionally, detection of the direction of the housing requires two "male" members (the magnetic fluxes of the Hall elements or projections of switches) and two "female" members (Hall elements or switches themselves). In contrast to this, this embodiment can reduce the number of "male" members to one. In this manner, this embodiment can reduce the number of elements necessary to detect the housing direction, and accordingly the area for mounting the elements.

According to this embodiment, the magnet 61 is arranged in the upper housing 2, and the first MR sensor 62 and second MR sensor 63 are arranged in the lower housing 3. Alternatively, the first MR sensor 62 and second MR sensor 63 may be arranged in the upper housing 2, and the magnet 61 may be arranged in the lower housing 3. According to this embodiment, the first MR sensor 62 and second MR sensor 63 are arranged at that end of the lower housing 3 which the biaxial hinge 21 does not connect. Alternatively, the first MR sensor 62 and second MR sensor 63 may be arranged in the vicinity of the biaxial hinge 21. In place of the first MR sensor 62 and second MR sensor 63, Hall elements corresponding to the respective polarities may be used. In this case, the number of types of the components (those that react with the N pole and those that react with the S pole) increases, which is disadvantageous in terms of the manufacturing cost.

A foldable cell phone according to the second embodiment of the present invention will be described. As shown in Fig. 11, a foldable cell phone 1A according to the second embodiment employs two magnets (magnets or second magnetic elements) 65 and 66 which have different polarities, and one magnetic sensor (first magnetic element) 67 which detects the direction of the magnetic fluxes, to obtain the same effect as that of the first embodiment described above. A case will be described hereinafter which employs a Hall element 67 as the magnetic sensor 67.

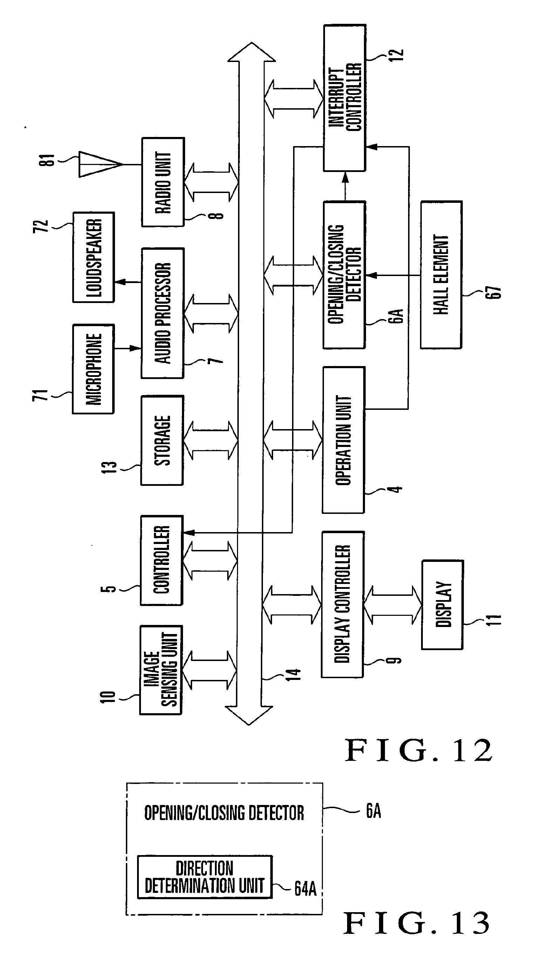

According to this embodiment, the N-pole magnet 65 and S-pole magnet 66 are arranged at positions which correspond to the positions of the first MR sensor 62 and second MR sensor 63 of the first embodiment. The Hall element 67 is arranged at a position which corresponds to the position of the magnet 61 of the first embodiment. More specifically, a lower housing 3 has the built-in N-pole magnet 65 and S-pole magnet 66 at positions almost symmetrical about a center axis A of the lower housing 3. An upper housing 2 has the built-in Hall element 67 at a position spaced apart from the center axis of the upper housing 2. The Hall element 67 electrically connects to an opening/closing detector 6A, as shown in Fig. 12. The direction of the output current of the Hall element 67 changes in accordance with the direction of the magnetic fluxes. Therefore, a direction determination unit (direction determining means) 64A of the opening/closing detector 6A shown in Fig. 13 determines the direction of the upper housing 2 from the direction of the output current of the Hall element 67. In Figs. 11 and 12, portions that are identical with the constituent elements shown in Figs. 5 and 9 are denoted by the same reference numerals as in Figs. 5 and 9.

### Industrial Applicability

A foldable cell phone can employ the present invention. Electronic apparatuses such as a PDA, notebook personal computer, and cam corder can also employ the present invention.

## Claims

1. An electronic apparatus **characterized by** comprising:
a first housing;
a second housing including a flat surface which opposes said first housing;
a biaxial hinge which includes two movable axes including a horizontal axis parallel to said flat surface of said second housing and a vertical axis perpendicular to the horizontal axis and connects said first housing to said second housing; and
a first magnetic element which is disposed at a position of said first housing which is spaced apart from a center axis of said first housing that extends through the vertical axis of said second-axis hinge.

2. An electronic apparatus according to claim 1, **characterized in that** said first housing comprises a housing that pivots about the vertical axis of said biaxial hinge as the center.

3. An electronic apparatus according to claim 2, **characterized by** further comprising two magnetic elements which are disposed at positions of said second housing which are across a center axis of said second housing perpendicular to the horizontal axis of said biaxial hinge.

4. An electronic apparatus according to claim 3,
**characterized in that** said two second magnetic elements comprise magnetic elements that are disposed at positions of said second housing which are symmetrical about the center axis of said second housing.

5. An electronic apparatus according to claim 3, **characterized in that** said second magnetic elements comprise magnetic elements which are disposed at positions to oppose said first magnetic element when said first housing opposes said second housing.

6. An electronic apparatus according to claim 3, **characterized by** further comprising display means disposed on a surface of said first housing.

7. An electronic apparatus according to claim 6, **characterized in that**
said first magnetic element comprises a magnet which generates a magnetic field, and
said second magnetic elements comprise magnetic sensors which detect the magnetic field.

8. An electronic apparatus according to claim 7, **characterized by** further comprising direction determining means for determining a direction of said display means on the basis of detection results of said two magnetic sensors.

9. An electronic apparatus according to claim 8, **characterized in that** said direction determining means comprises means for determining the direction of said display means in accordance with which one of said two magnetic sensors detects the magnetic field.

10. An electronic apparatus according to claim 6, **characterized in that**
said two second magnetic elements comprise magnets which have different polarities, and
said first magnetic element comprises a magnetic sensor which detects a direction of a magnetic flux.

11. An electronic apparatus according to claim 10, **characterized by** further comprising direction determining means for determining a direction of said display means on the basis of a detection result of said magnetic sensor.

12. An electronic apparatus according to claim 1, **characterized in that** said electronic apparatus comprises a cell phone.

13. An electronic apparatus according to claim 1, **characterized in that** said electronic apparatus comprises a notebook personal computer.

14. A method of detecting a housing direction, **characterized by** comprising the steps of:
detecting a magnetic field, generated by a magnet disposed at a position of a first housing which is spaced apart from a center axis of the first housing, by either one of two magnetic sensors that are disposed at positions of a second housing which are across a center axis of the second housing that connects to the first housing through a biaxial hinge; and
determining a direction of the first housing with respect to the second housing in accordance with which one of the two magnetic sensors has detected the magnetic field.
